# DEMANDE DE BREVET EUROPEEN

(11) **EP 1 234 723 A1**
(43) Date de publication de la demande: **28.08.2002**
(21) Numéro de dépôt: 02290403.1
(22) Date de dépôt: 20.02.2002
(51) Int. Cl.: B60R 1/10

(54) **Dispositif permettant la visibilité vers l'avant sur des véhicules du côté opposé au conducteur**

(30) Priorité: 21.02.2001 FR 0102308
(71) Demandeur: Sonet, Michel, 27140 Gisors (FR)
(72) Inventeur: Sonet, Michel, 27140 Gisors (FR)

(57) **Abrégé**

L'ensemble de fixation, réalisé en acier ou en plastique dur, est composé d'un axe vertical (4) et d'un axe poterne (6). L'adjonction sur cet axe poterne d'un miroir (5), dont la nouveauté consiste dans le fait qu'il se présente face au trafic, complète l'ensemble.

## Description

La présente invention concerne la circulation routière, tous types de véhicules compris. Plus exactement la sécurité et le confort de conduite des chauffeurs circulant à bord d'un véhicule dont le volant est situé du même côté que s'écoule le trafic. Pour parvenir à effectuer le dépassement d'un poids lourd, par exemple le dit chauffeur, seul, effectue une manoeuvre très souvent dangereuse qui peut s'apparenter à la roulette russe : ou ça passe ou ça casse, non seulement pour lui mais aussi pour l'ensemble des usagers arrivant en sens inverse.

Aujourd'hui aucune solution n'existe pour limiter ce risque. Seule la demande de brevet FR 2640210 de décembre 1988 concernant « un viseur pour automobile à volant gauche circulant sur une route à gauche et vice versa » a tenté de palier à cette lacune. Toutefois, pour deux raisons son application n'a jamais vu le jour : d'abord le non paiement des redevances de brevet, ensuite la modification technique des véhicules.

Le dispositif suivant l'invention, permettant d'éliminer à 100% l'ensemble des risques ci-dessus listés, après bien sûr un réglage préalable adapté au véhicule et au chauffeur, est basé sur les trois caractéristiques innovantes suivantes :
- La première, la mise en place d'un miroir, placé au niveau de la portière passager orienté vers l'avant afin de permettre le balayage du trafic et d'obtenir ainsi l'ensemble des informations de conduite nécessaires.
- La deuxième, que le système des fixations est adaptable par réglage sur tous les véhicules de même catégorie, sauf contre-indication éventuelle du fabricant.
- La troisième provient du fait que la mise en place de l'invention n'obère en rien l'efficacité du rétroviseur de la dite portière puisqu'elle est placée au -dessus de celui-ci.

De façon plus précise, le dit miroir est placé sur un axe vertical se fixant lui-même sur la portière aux niveaux haut et bas de la vitre passager, par un système rigide, lui même réglable en hauteur largeur et profondeur. Les parties en contact avec la carrosserie sont protégées par une coquille antidérapante caoutchoutée ou en plastique dur. Le miroir se présente sous la forme d'un rectangle dont la longueur est en position verticale. Ainsi, alors que la largeur de la chaussée est correctement balayée, c'est l'axe profondeur qui est privilégié Cela permet de donner au chauffeur les informations nécessaires à sa sécurité de façon aussi sure qu'il pourrait les obtenir en se servant de ses propres yeux en direct. De plus pour augmenter encore le confort de conduite. Celui-ci bénéficie de tous les traitements existants à ce jour et notamment l'anti-buée et l'anti-éblouissement.

On peut concevoir plusieurs modèles plus ou moins luxueux. Notamment avec le miroir inamovible à l'axe fixateur, un autre avec celui-ci amovible, un autre encore totalement intégré aussi bien au véhicule lui même qu'à son design dans lequel seul le miroir serait mobile. Un dernier enfin avec tous les réglages et mise au point entièrement électrique et automatique. Nous allons nous intéresser à décrire entièrement la fabrication du premier modèle cité.

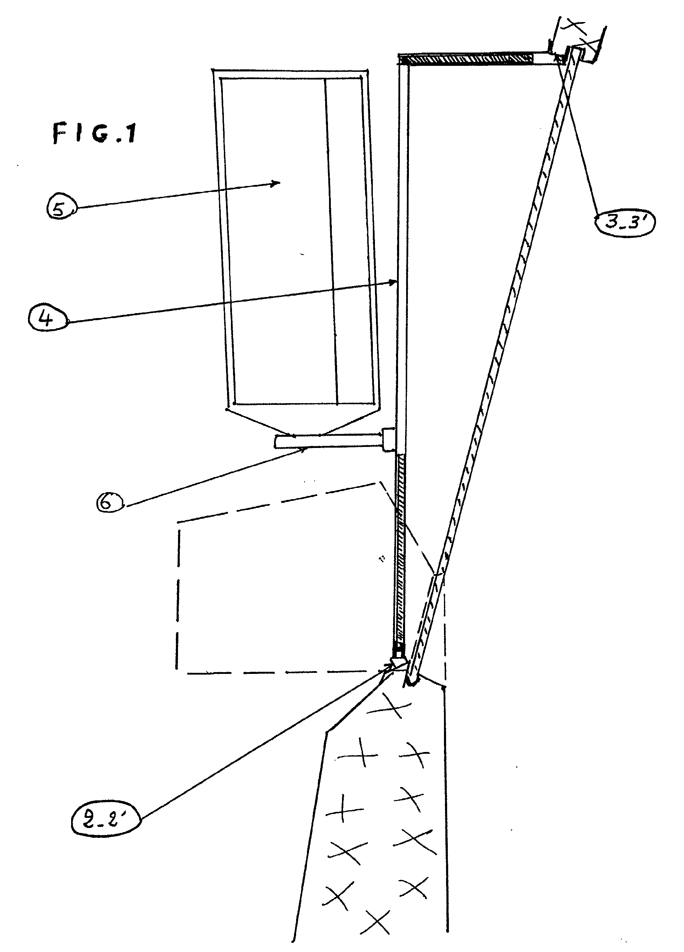

Les dessins annexés illustrent l'invention dans la fabrication du dit modèle.
La figure 1 représente de face le dispositif complet en état de marche.
Les figures 2 et 2' les détails concernant le mode de fixation inférieur de l'axe vertical.
Les figures 3 et 3' les détails concernant le mode de fixation supérieur de l'axe vertical.
La figure 4 une vue en coupe de l'axe vertical.
La figure 5 la présentation de la vitre du miroir en coupe.
Ces dessins sont présentés en configuration de route volant à gauche et « antéviseur » à droite, version automobile. Les versions poids lourd et autocar n'ont bien sûr pas les mêmes dimensions. Pourtant, le principe reste le même. Pour être plus explicite, il convient de se reporter aux figures 1, 2 et 3 :
1 l'ensemble vu de face, 2 et 3 l'articulation des fixations de l'axe vertical sur la portière.

l'axe vertical 4 réalisé en acier inoxydable ou tout autre matériaux dur, épais de 1,5 millimètre, d'une longueur de 40 centimètres minimum et large d'environ 7,5 centimètres présenté en U avec retour de 1 centimètre environ et présentant la partie faisant face au trafic profilé. La hauteur initiale peut être augmentée d'environ 35 % par la présence d'un système de réglage, initialement envisagé sous forme d'un axe écroûté permettant la mobilité de l'ensemble. Toutefois, par commodité et par soucis de sécurité, tout autre mode de réglage est envisageable.

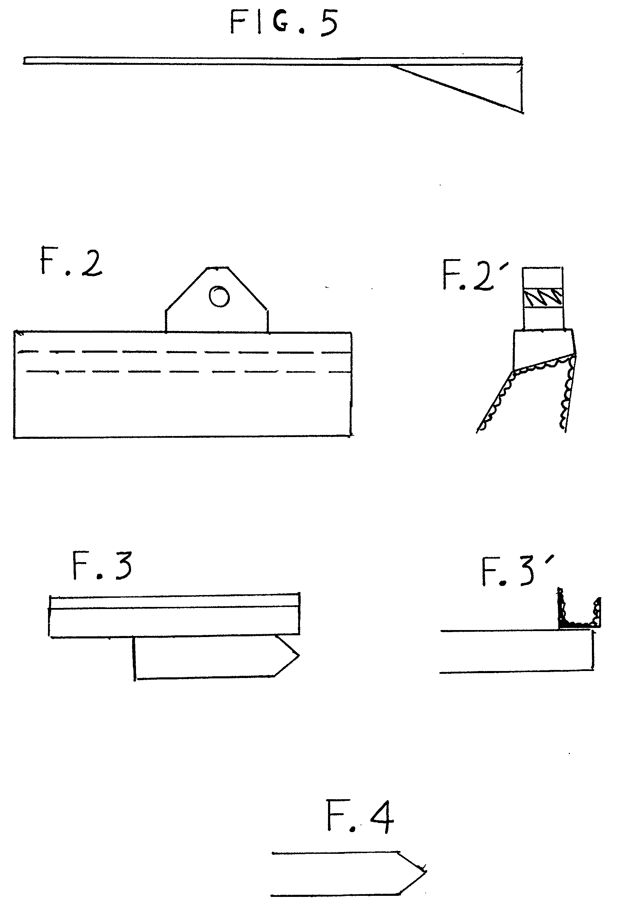

Cet axe se fixe dans la portière par, en haut la gouttière 3 en bas par l'axe 2. Ces deux pièces sont conçues pour permettre les réglages et latérale et en profondeur du champ visuel tout en annulant tous risques d'arrachage de l'ensemble par le souffle parvenant de face. Epais de 1 à 1,2 millimètres, recouverte d'une coquille antidérapante protégeant en même temps la carrosserie, l'axe 2 se présente sous la forme d'un rectangle long de 8 centimètres environ sur une largeur de 5 centimètres plié comme indiqué sur la figure 2'. L'axe vertical vient s'y fixer par un écrou sur un ergot percé en son milieu, situé à 40% de la longueur de la dite pièce.

La gouttière, comme indiqué sur la figure 3', se présente sous forme de U long de 6 centimètres, large de 2,7 centimètres décomposée comme suit :
0,7 centimètres partie du système pénétrant dans l'angle du châssis fenêtre.
1 centimètre partie centrale recevant sur 8 millimètres l'axe de réglage latérale.
1 centimètre la partie fixée à la carrosserie .
A noter que cette pièce est mobile et munie d'un système élastique lui permettant de se fixer en pression sur la carrosserie extérieure.
L'axe de réglage latéral, placé au sommet de l'axe vertical se présente sous la même forme que celui-ci. La longueur initiale de 13 centimètres, peut être augmentée de 70% grâce à l'existence d'un axe écroûté réglable dans l'angle droit extérieur, seule pièce fixe de l'ensemble, car soudée en angle droit. Evidemment, le profilé de l'ensemble est conservé après réglage par la mise en place de coquille.
Le miroir est composé de deux parties distinctes :
- Le corps du miroir et son axe fixateur que par souci de clarté nous appellerons poterne.
- Le corps du miroir est fixé à l'axe poterne par le centre de sa partie basse, permettant par sa mobilité le réglage angulaire avant.
Le miroir proprement dit de 12 centimètres de large minimum pour 23 centimètres de haut est incrusté dans une coquille en plastique dur, qui ressort tout autour de 0,5 centimètres seulement, sauf sur la partie basse qui reçoit le système de fixation à l'axe poterne.

Par souci d'un balayage idéal du trafic, le miroir voit sa largeur empiétée dans l'angle le plus proche du véhicule par la présence d'un autre miroir dont l'angle de fixation est de 20 degrés par rapport à l'autre et la fixation au quart du même miroir de base.

## Revendications

1. Dispositif global qui permet à son utilisateur, le chauffeur,de pouvoir, en toute sécurité, conduire sur une route dont le trafic s'écoule du côté inverse ou se trouve son volant, **caractérisé par le fait qu'**il se compose de deux axes, 1 vertical, 1horizontal ainsi que d'un miroir mutiple.

2. Dispositif selon la revendication 1 **caractérisé par le fait que** l'axe vertical, amovible, se fixe sur l'extérieur de la porte passager

3. Dispositif selon la revendication 2 **caractérisé par le fait que** l'axe vertical est réglable par l'intermédiaire d'un axe écrouté.

4. Dispositif selon la revendication 2 **caractérisé par le fait que** les éléments de fixation supérieur et inférieur de l'axe vertical sont mobiles d'avant en arrière.

5. Dispositif selon la revendication 1 **caractérisé par le fait que** l'axe horizontal est réglable par l'intermédiaire d'un axe écrouté.

6. Dispositif selon la revendication 1 **caractérisé par le fait que** le miroir est orienté face au trafic.

7. Dispositif selon la revendication 1 **caractérisé par le fait que** le miroir s'intègre à l'ensemble en se fixant sur l'axe vertical.

8. Dispositif selon la revendication 1 **caractérisé par le fait que** le miroir, de forme rectangulaire, est large d'environ 12 cm et haut de 23 cm environ.

9. Dispositif selon la revendication 1 **caractérisé par le fait que** la surface du miroir se trouve incurvée sur toute sa hauteur,au niveau du quart intérieur par la fixation d'un autre miroir , d'un angle de 20 degré environ.

10. Dispositif selon la revendication 1 **caractérisé par le fait que** les parties antérieures des deux axes sont profilées.
